# EUROPEAN PATENT APPLICATION

(11) **EP 4 625 169 A1**
(43) Date of publication of application: **01.10.2025**
(21) Application number: 25161495.4
(22) Date of filing: 04.03.2025
(51) Int. Cl.: G06F 9/50

(54) **APPARATUS AND METHOD FOR DYNAMIC REASSIGNMENT OF SYSTEM RESOURCES AMONG ACTIVE CORES AND IP BLOCKS**

(30) Priority: 29.03.2024 US 202463571633 P; 27.12.2024 US 202419004176
(71) Applicant: Intel Corporation, Santa Clara, CA 95054 (US)
(72) Inventor: Diamand, Israel, 99850 Aderet (IL); Graniello, Benjamin, Gilbert, 85234 (US); Rubinstein, Asaf, 4444204 Kefar Sava (IL); Hacham, Gal, 4993500 Kfar Sirkin (IL)
(74) Representative: Goddar, Heinz J.

(57) **Abstract**

An apparatus and method for dynamic reassignment of resources. For example, an example method comprises: executing a plurality of threads on a plurality of cores and/or functional circuit blocks, the cores and/or functional circuit blocks coupled to an interconnect; associating, by resource management circuitry, a class of service (CLOS) level of a plurality of CLOS levels with each thread of the plurality of threads, the resource management circuitry to detect one or more inactive CLOS levels corresponding to inactive threads; remapping, by the resource management circuitry, active threads from corresponding active CLOS levels to the one or more inactive CLOS levels, the remapping to provide the active threads with a larger allocation of resources than provided at the corresponding active CLOS levels; and allocating any remaining resources to the active threads in accordance with the respective active CLOS levels of the active threads.

## Description

### BACKGROUND

### Field of the Invention

This invention relates generally to the field of computer processors. More particularly, the invention relates to an apparatus and method for dynamic reassignment of system resources among active cores and IP blocks.

### Description of the Related Art

An SoC may include a set of cores and various types of devices, sometimes referred to as IP blocks (e.g., accelerators, IO devices, graphics processors, etc), all of which share SoC resources such as shared caches, buffers, memory bandwidth and routing resources. The trivial implementation is to share the resources equally between all devices.

However, the software threads executed on the cores and the devices may have different priority levels. A more beneficial implementation is to assign the system resources to the threads and devices (sometimes referred to as "users" of the resources) according to a prioritization scheme.

### BRIEF DESCRIPTION OF THE DRAWINGS

A better understanding of the present invention can be obtained from the following detailed description in conjunction with the following drawings, in which:
FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 illustrates an embodiment of a system to reuse resources.
FIG. 14 illustrates an embodiment of a flexible mapping scheme to assign RMIDs or CLOS.
FIG. 15 illustrates an embodiment of a MSR.
FIG. 16 illustrates an embodiment of a method for tracking more threads, applications, or VMs than the number available on the platform.
FIG. 17 illustrates an embodiment of a method for reusing RMIDs for a thread.
FIG. 18 illustrates an embodiment of per thread MSRs that are used to report RMID occupancy.
FIG. 19 illustrates a set of waymasks in accordance with embodiments of the invention.
FIG. 20 illustrates a method for reallocating CLOS resources and treating resources not allocated to active CLOS levels as shared resources.
FIG. 21 illustrates using an active vector with a bit per CLOS for remapping resources.
FIG. 22 illustrates an embodiment of an apparatus with resource management circuitry for performing CLOS-based resource remapping.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

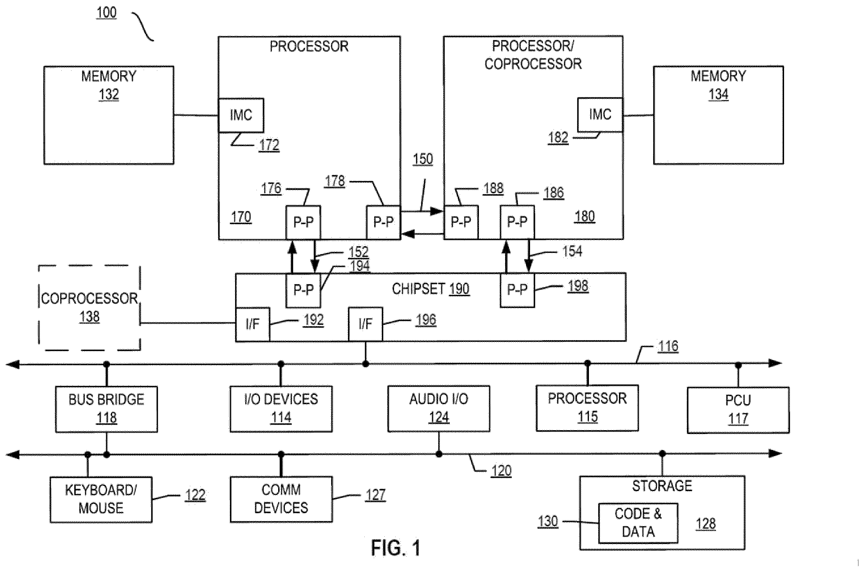

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multidrop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

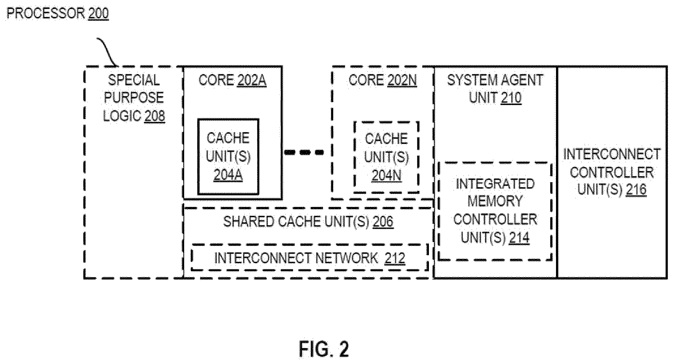

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

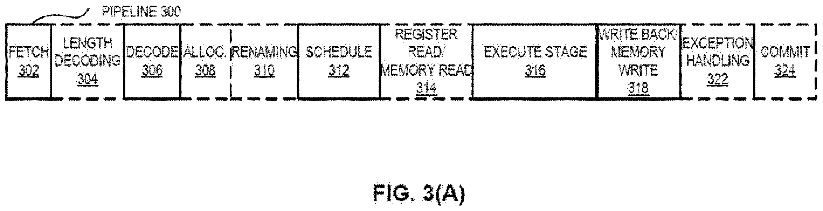

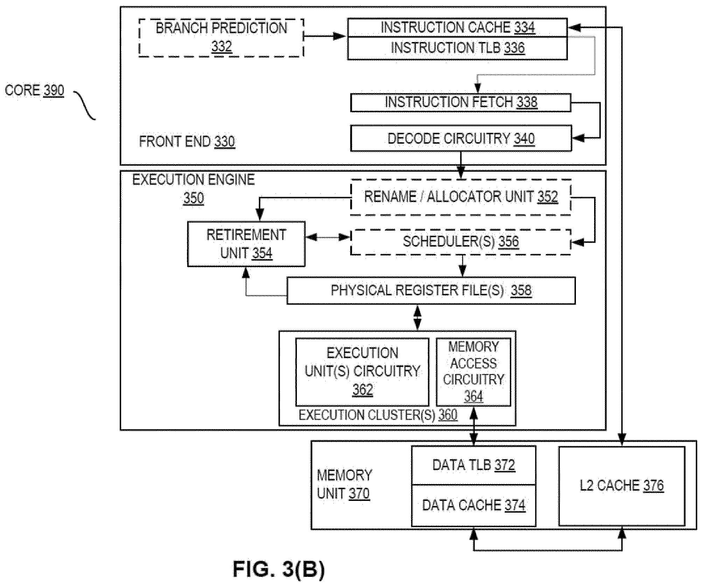

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

**In** **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster- and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

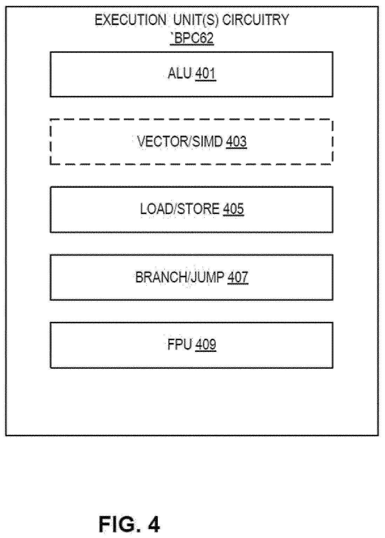

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

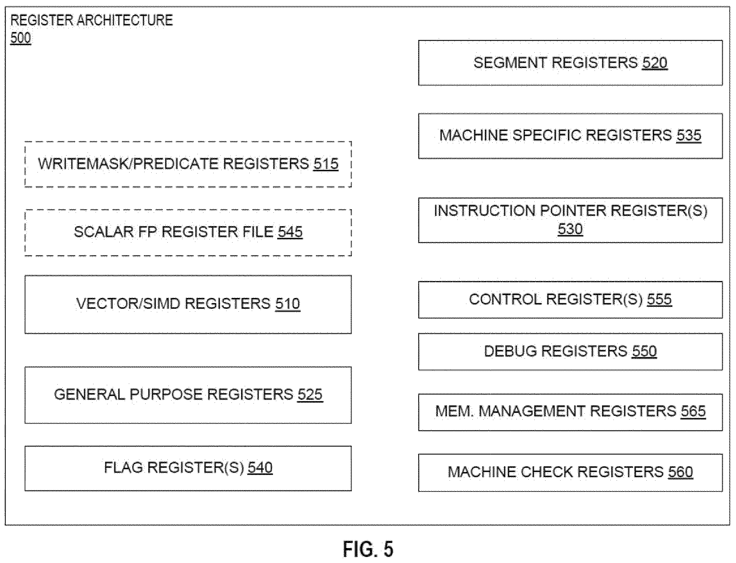

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

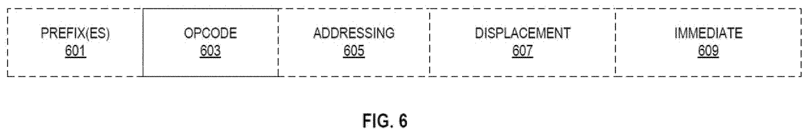

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional3-bit opcode field is sometimes encoded in another field.

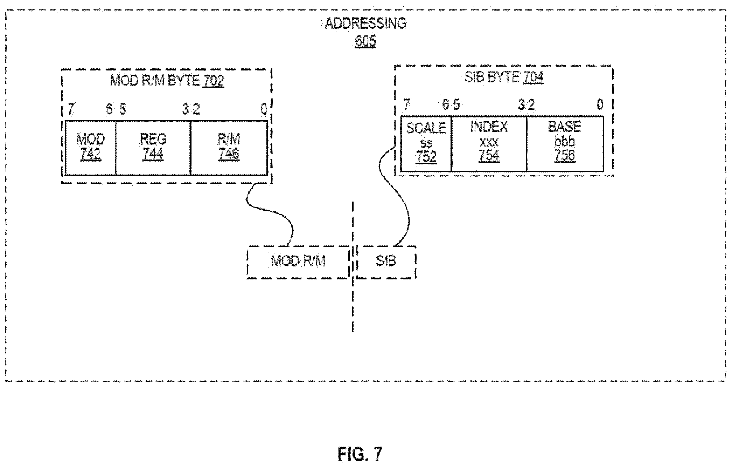

The addressing field 605 is used to address one or more operands of the instruction, such as a location in memory or one or more registers. **FIG.** 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scaLe} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

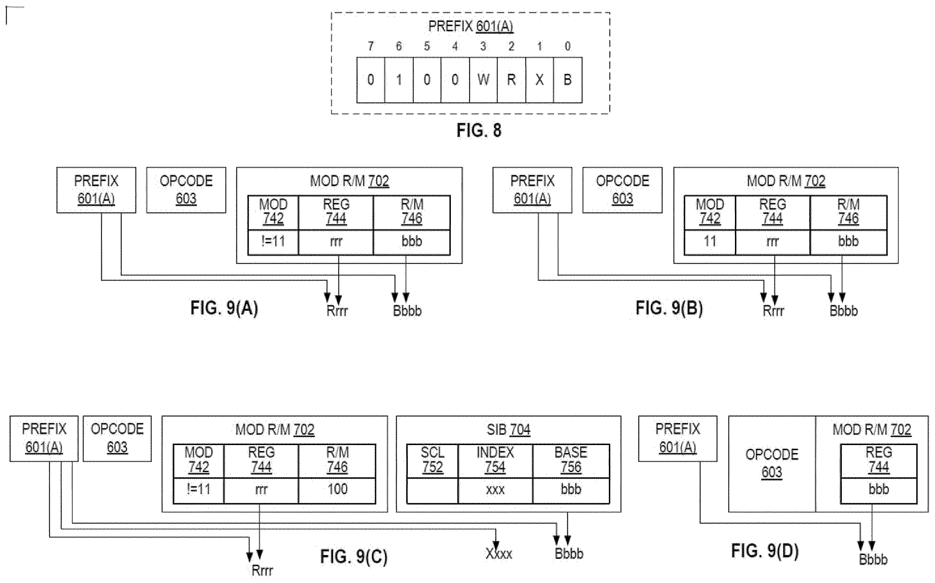

**FIG. 8** illustrates embodiments of a first prefix 601 (A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

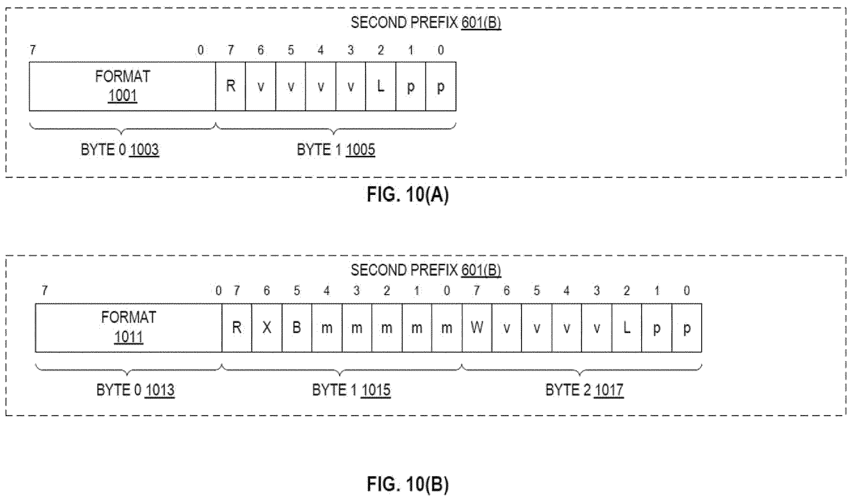

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as ww may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, ww, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, ww, the Mod R/M R/M field 746, and the Mod R/M reg field 744 encode three of the four operands. Bits[7:4] of the immediate 609 are then used to encode the third source register operand.

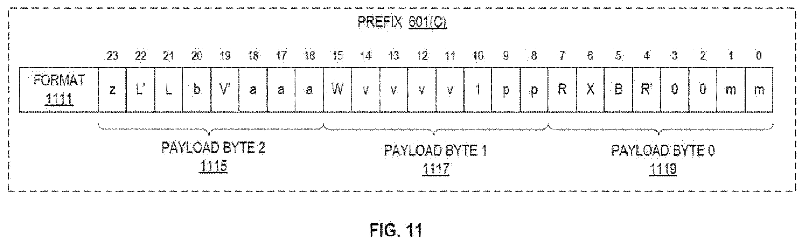

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field **744** and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmaskfield's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | VVVV | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | VVVV | GPR, Vector | 2^{nd} Source or Destination |
| **RM** | ModR/M R/M | GPR, Vector | 1st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | VVVV | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

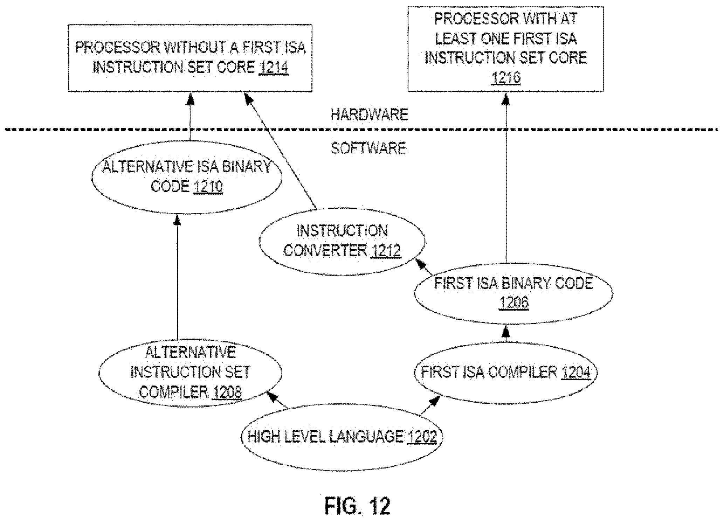

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

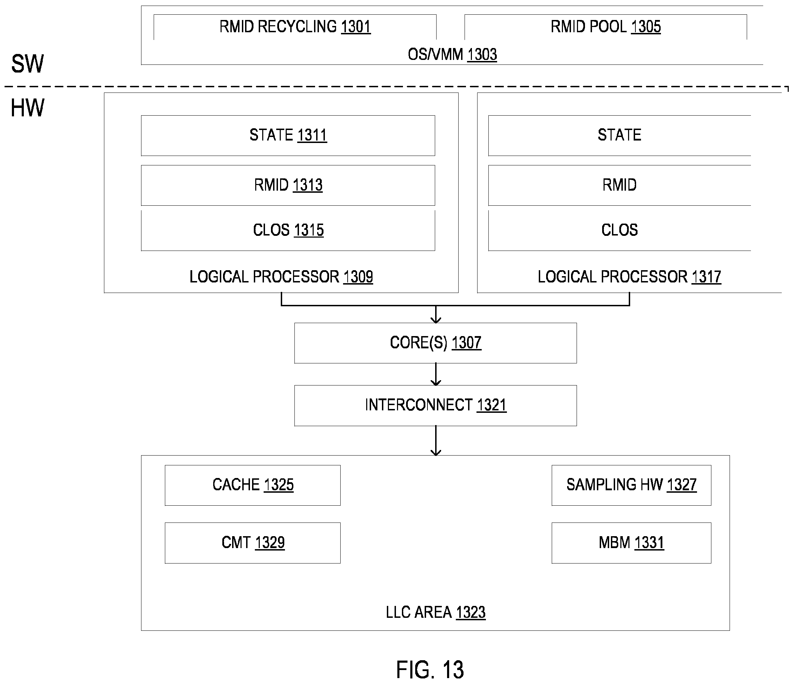

**FIG. 13** illustrates an embodiment of a system with hardware and software for allocating resources to logical processors (threads) in accordance with class of service (CLOS) values. In the illustrated embodiment, each core 1307 comprises two logical processors 1309-1317 each of which may be assigned a different CLOS value. For example, logical processor 1309 in the example is assigned CLOS 1315.

In an embodiment, a mechanism for an OS or VMM 1303 to indicate a software-defined identification (ID) for one or more threads (applications, virtual machines, etc.) scheduled to run on a logical processor is called a Resource Monitoring ID (RMID), such as RMID 1313 assigned to logical processor 1309. Each logical processor (thread) 1309-1317 in the system can be assigned an RMID independently, or multiple logical processors can be assigned to the same RMID value (e.g., to track an application with multiple threads). For each logical processor, only one RMID value is active at a time. In some embodiments, the number of RMIDs per processor is given by information stored in the processor itself.

There are a finite number of RMIDs available on a platform (typically tens to hundreds), while a system may run thousands of threads or applications of interest, meaning that a scheme to efficiently recycle RMIDs in real-time would be beneficial. It is possible to run up against this hardware limitation very quickly in real world scenarios, for example when monitoring more software threads than there exist RMIDs. Some implementations overcome the limited RMID resource by reusing or recycling RMIDs both using software algorithms and mechanisms implemented at the hardware level. In some embodiments, RMID recycling logic 1301 recycles RMIDs (e.g., freeing them from an association with a logical processor) and adds the recycled RMIDs to an RMID pool 1305 from which they can be reassigned to new logical processors 1309-1317.

In some embodiments, the various CLOS configurations described herein are managed using one or more programmable model-specific registers (MSRs) that specify the active RMID 1313, the CLOS value 1315, and additional state information 1311 associated with each logical processor 1309.

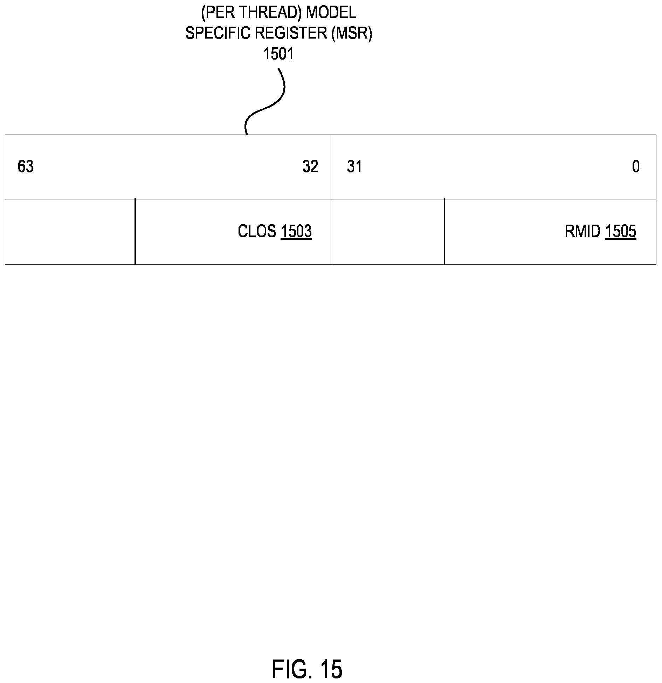

**FIG. 15** illustrates an example in which a per logical processor (e.g., thread) MSR 1501 includes fields for class of service (CLOS) 1503 and RMID 1505. A write to this MSR 1501 can be performed to change the RMID 1505 and the CLOS 1503 of the corresponding logical processor. The logical processor 1309 also includes a mechanism (such as one or more MSRs or cache memory) to store a state 1311 of the logical processor 1309. Typically, there are more than one logical processors 1309, 1317 that are executed on one or more hardware cores such as core 1319. Not shown is a credit accounting mechanism of the core which, in some embodiments, is per logical processor (RMID).

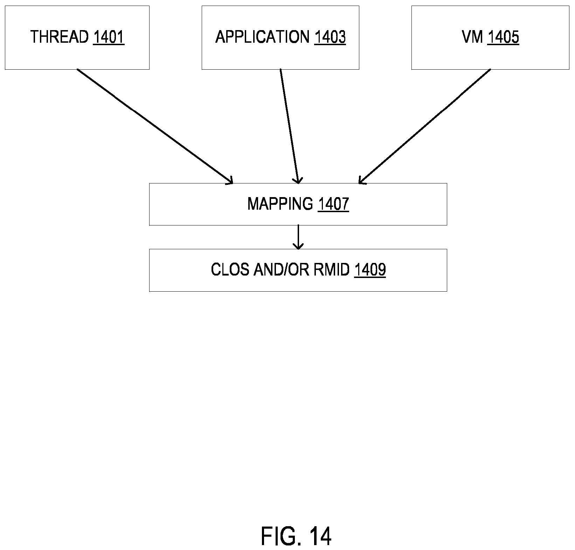

Threads may be monitored individually or in groups, and multiple threads may be assigned the same RMID or CLOS. **FIG. 14** illustrates an embodiment of a flexible mapping scheme to assign CLOS and/or RMID values 1409. One or more threads 1401, applications 1403, and/or VMs 1405 are subjected to a mapping 1407 algorithm to be mapped to one or more CLOS values and/or RMIDs 1309.

As each application 1403 or VM 1405 consists of one or more threads, each application or VM is capable of being monitored. For example, all threads in a given VM 1405 could be assigned the same RMID or CLOS, as could all threads in an application 1403. When a thread is swapped onto a core, the architectural register state of the logical processor is swapped into the hardware thread on the physical core.

Coupled to the core(s) is an interconnect 1321. In some embodiments, this interconnect is a point-to-point link between cores and at least a last level cache (LLC) area 1323. This area 1323 includes cache memory 1325 and in some embodiments includes sampling hardware 1327, cache monitoring technology (CMT) hardware 1329, and memory bandwidth monitoring hardware 1331. These shared resource monitoring hardware track cache metrics such as cache utilization and misses as a result of memory accesses according to the RMIDs and typically report monitored data via one or more counter registers.

In some embodiments, software 1303 includes instructions for RMID recycling 1301 and a pool for RMIDs 1305 for the processor (available or not). Software executing on each core is subject to the limit for memory bandwidth that the OS or VMM has programmed for it, allowing the OS/VMM to prioritize apps and to limit "noisy neighbor" applications which may be over-utilizing memory bandwidth. This has applicability across the datacenter, communications, NFV/SDN, etc.

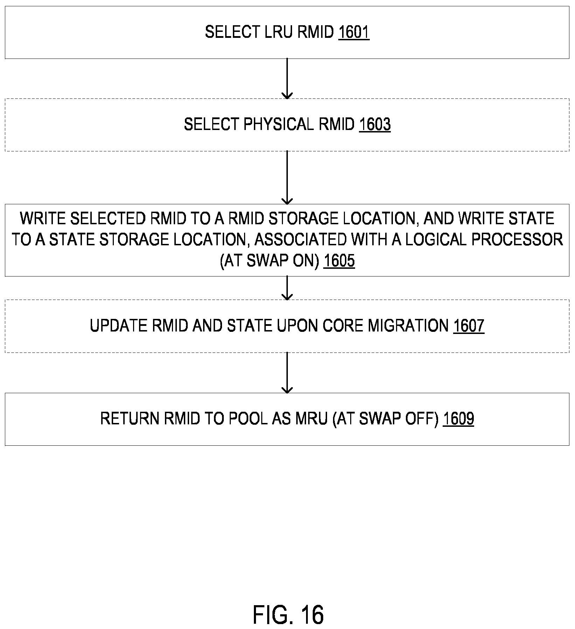

**FIG. 16** illustrates an embodiment of a method for tracking more threads, applications, or VMs than the number available on the platform. In this embodiment, least recently used (LRU) RMIDs are recycled. Typically, this recycling method is code run in an OS or VMM such as RMID recycling 1301. In this embodiment, a least-recently used (LRU) list of RMIDs is maintained. This may be an extension of RMID pool 1305 (wherein the pool identifies when RMIDs are used) or as a separate data structure (such as a queue of RMIDs). Typically, this list is maintained by software. The LRU list mimics the behavior of the cache in that RMIDs that have been used to monitor a software thread most recently are the most likely to have a high data occupancy value. RMIDs that were used farther in the past are more likely to have had any data naturally evicted from the cache and consequently should have small data occupancy values.

At 1601, a LRU RMID is selected at 1601. For example, a LRU RMID from RMID pool 1305 is selected by an OS or VMM. In a queue scenario, the end of the queue is selected. In some embodiments, the LRU RMID that is selected is a virtual RMID that is always allocated. Accordingly, a corresponding physical RMID will need to be selected at 1603. At 1605, at swapping on to the core, the selected RMID is written to a RMID storage location associated with the logical processor of the application, VM, thread, etc. For example, a RMID value is written to the MSR for the logical processor as shown in as RMID storage 1313. Additionally, the thread state is written to a storage location such as 1311. Typically, one or both of these writings are done when the thread is swapped onto the core such that is to be executed by the core.

The writing of the RMID value and state are updated upon core migrations at 1607 in some embodiments. For example, as the thread is swapped between cores (from a first core to second core), the RMID value and state follow the thread.

At 1609, the RMID associated with the thread is returned to the RMID pool when the thread is swapped off core. For example, the RMID is put back into RMID pool 1305. In some embodiments with a RMID queue, the RMID goes to the most recently used (MRU) end of the queue.

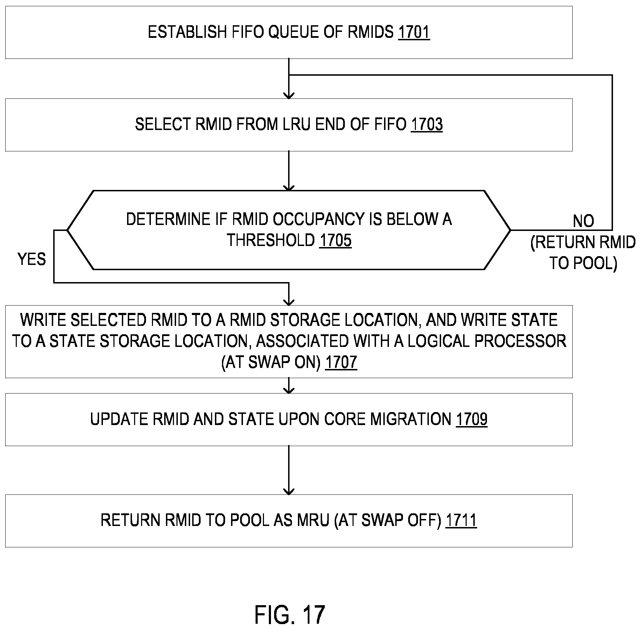

**FIG. 17** illustrates an embodiment of a method for reusing RMIDs for a thread. In this embodiment, least recently used (LRU) RMIDs are recycled, but with an additional check. Typically, this recycling method is code run in an OS or VMM such as RMID recycling 1301. In this embodiment, a least-recently used (LRU) list of RMIDs is maintained. This may be an extension of RMID pool 1305 (wherein the pool identifies when RMIDs are used) or as a separate data structure (such as a queue of RMIDs). Typically, this list is maintained by software. The LRU list mimics the behavior of the cache in that RMIDs that have been used to monitor a software thread most recently are the most likely to have a high data occupancy value. RMIDs that were used farther in the past are more likely to have had any data naturally evicted from the cache and consequently should have small data occupancy values.

At 1701, a first-in, first-out (FIFO) queue of RMIDs by order of use is established. At 1703, a LRU RMID from the end of the queue is selected. At 1705, a determination of if the selected RMID's occupancy (its associated L3 cache occupancy) is below a threshold is made. In some embodiments, the RMID occupancy is reported by a combination of two MSRs.

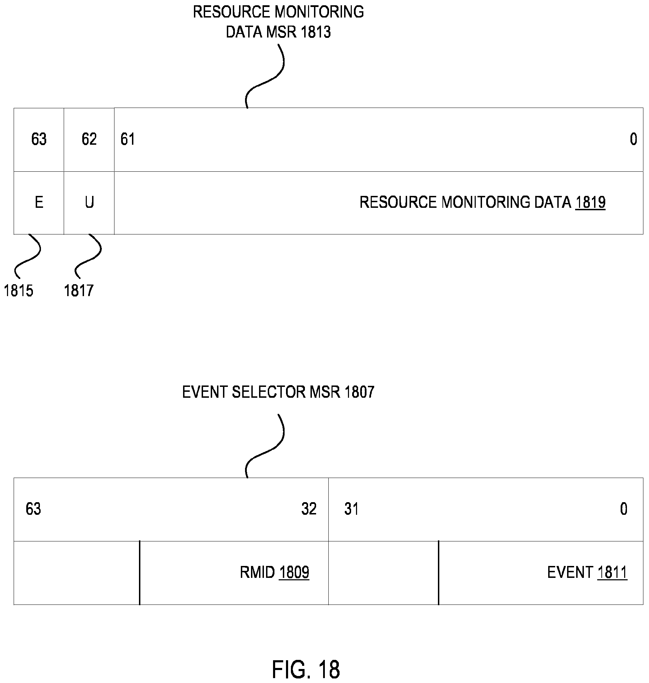

**FIG. 18** illustrates an embodiment of per thread MSRs that are used to report RMID occupancy. A first MSR 1813 is used to store resource monitoring data 1819. This MSR 1813 reports monitored data when available and includes an event field 1815, an unavailable field 1817, and resource monitoring data 1819. In some embodiment, the resource monitoring data comprises a count of a particular event indicated by the event field. If software configures an unsupported RMID or event type, then bit 1815 may be set, indicating there is no valid data to report. If the unavailable field 1817 is set, it indicates monitored data for the RMID is not available, and field 1819 should be ignored. The occupancy data is determined from the resource monitoring data 1819 for the determination of in 1705.

A second MSR 1807 is a per thread event selector MSR which includes a field for a corresponding RMID 1809 and an event ID 1811 for indicating a type of event to monitor. Exemplary event IDs include L3 cache occupancy, L3 cache total external bandwidth, and L3 cache local external bandwidth. In the above determination, the event ID 1811 has been set to track occupancy.

When the RMID occupancy is not below the threshold, another RMID from the LRU end of the FIFO is selected at 1703 and the selected RMID is returned to the pool as MRU. When the RMID occupancy is below the threshold, then, at 1707, at swapping on to the core, the selected RMID is written to a RMID storage location associated with the logical processor of the application, VM, thread, etc. For example, a RMID value is written to the MSR 1313 for the logical processor. Additionally, the thread state is written to a storage location such as 111. Typically, one or both of these writings are done when the thread is swapped onto the core such that is to be executed by the core.

The writing of the RMID value and state are updated upon core migrations at 1709 in some embodiments. For example, as the thread is swapped between cores (from a first core to second core), the RMID value and state follow the thread. At 1711, the RMID associated with the thread is returned to the RMID pool when the thread is swapped off core. For example, the RMID is put back into RMID pool 1305. In some embodiments with a RMID queue, the RMID goes to the most recently used (MRU) end of the queue.

### APPARATUS AND METHOD FOR DYNAMIC REASSIGNMENT OF SYSTEM RESOURCES AMONG ACTIVE CORES AND IP BLOCKS

An SoC may include a set of cores and various types of devices, sometimes referred to as IP blocks (e.g., accelerators, IO devices, graphics processors, etc.), all of which share SoC resources such as shared caches, buffers, memory/cache bandwidth, and routing resources. While a trivial implementation would share the resources equally between all devices, the software threads executed on the cores and the devices may have different priority levels. A more beneficial implementation is to assign the system resources to the threads and devices (sometimes referred to as "users" of the resources) according to a prioritization scheme. For example, some implementations described herein define a Class Of Service (CLOS) which is a priority level that is assigned to the thread/logical processor or device according to its priority or performance requirements. The OS can assign a CLOS for each thread running in the system, or for each device in the SoC. The CLOS can be assigned at hardware level (e.g. a specific accelerator always has the same CLOS) or at software level (e.g. a specific core gets a CLOS according to the software that is currenting being executed on the core).

One problem which exists is that even though the various threads are not active all the time, they still may be have assigned resources, thereby wasting system resources. For example, in CLOS implementation, the allocation to a CLOS is static and does not take into account the inactivity of a thread or device (e.g., CLOS_0 (highest priority) gets 50% of a specific resource, CLOS_1 gets 30%, CLOS_2 gets 20%, CLOS_3 gets 10%, regardless of thread/device activity status).

Embodiments of the invention include techniques to reassign the system resources among the active threads/users, thereby avoiding wasted resources and, hence increasing the overall system performance and wasted power. In particular, these embodiments detect which classes of services are actually assigned to active threads and IP blocks, and which classes of service are currently not assigned to any active user. System resources are then re-allocated among the active threads and IPs, in a configurable and tunable way. These embodiments also provide the ability to immediately switch and re-assign the system resources when a thread or IP changes from active to inactive and vice versa.

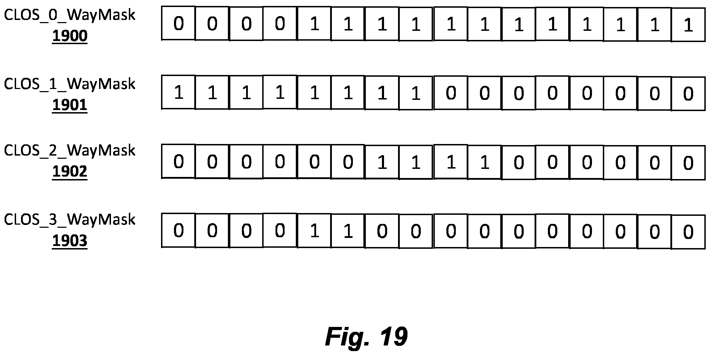

Embodiments of the invention are described using a specific example of a multi-threaded system, where each thread is assigned one of four possible classes of service (CLOSs). **FIG. 19** illustrates four waymasks 1900-1903 associated with each of the four CLOS values, CLOS_0 to CLOS_3. The four waymasks 1301-1304 indicate the cache ways of a shared cache (e.g., an LLC) which are allocated to each respective CLOS. In particular, each bit in a waymask 1900-1903 corresponding to a particular cache way (meaning there are a total of 16 ways in the example). A bit is set in the waymask indicates that the corresponding cache way is allocated for use by the respective CLOS (e.g., for use by the core/thread/IP that is running in that CLOS).

Thus, the shared resource in this example is a 16-way associative cache (e.g., an LLC or a System Cache). It should be noted, however, that embodiments of the invention can be implemented with any number of classes of service, any type of shared resource, any kind of competitors for the shared resource (e.g., in addition to software threads, hardware accelerators and IO devices).

In the illustrated example, CLOS_0 has a '1 in bits [11:0], meaning that it can allocate in ways[11:0], which is 75% of the cache. CLOS_1 has '1 in bits [15:8] so it can use up to 50% of the cache. Note that the various way masks 1900-1903 can overlap, e.g., bits [9:8] are '1 in the way masks for CLOS levels 0,1 and 2, which means that these ways are shared between those CLOS levels. The waymask vectors can be either hardwired or configurable.

The problem with such scheme is that in any given time, not all classes of services are assigned to any active software thread or hardware IP block. For example, if currently no thread/IP block is running at CLOS_0, the ways that are uniquely assigned to CLOS_0 (ways[5:0] in the above example) are not used, so this portion of the system resources are wasted.

To address this problem, embodiments of the invention track the activeness of each CLOS and re-assign the resources of an inactive CLOS to another CLOS. In some implementations, all resources that not assigned to any CLOS become a "shared resource" which can be used by any thread/IP block at any CLOS.

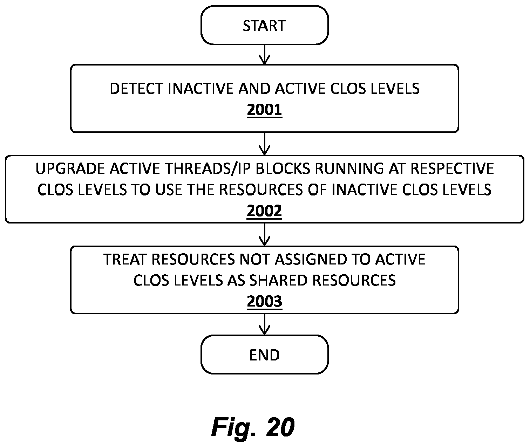

Referring to the method in **FIG. 20**, at 2001, inactive CLOS levels and active CLOS levels are identified. At 2002, active threads/IP blocks running at respective CLOS levels are upgraded to use the resources of inactive CLOS levels. At 2003, resources which are not assigned to active CLOS levels are treated as shared resources, and thereby temporarily reassigned for use by other CLOS levels.

As an example, with four waymasks 1900-1903 as illustrated in **FIG. 19****,** if CLOS levels 0 and 2 are detected as inactive and CLOS levels 1 and 3 are detected as active, the thread/IP block that is running at CLOS level 1 is upgraded to use the resources of CLOS level 0, and the thread/IP block that is running at CLOS level 3 is upgraded to use the resources of CLOS level 2. Thus, CLOS 1 is assigned ways [11:0] (from CLOS_0_waymask 1900) while CLOS 3 is assigned ways [9:6] (from CLOS_2_waymask 1902). Finally, since ways [15:12] are not assigned to any active CLOS, they are treated as a shared resource, so the final way mask for CLOS 1 is [15:0], while the final way mask for CLOS 3 is [15:12, 9:6].

The combination of operations 2002 and 2003 provide for an intelligent allocation of resources. If only operation 2002 is performed, there may still be unused resources. Implementing operation 2003 only (allocating the unused ways to any CLOS) would modify the relative ratio between the different CLOS levels. Thus, the combination of operations 2002 and 2003 can be used to either maintain the relative ratio between different CLOS levels, or limit the allocation for some CLOS levels.

Returning to the example in **Figure 19****,** by default, CLOS 1 is allocated 8 ways and CLOS 3 is allocated 2 ways (i.e., CLOS 1 is allocated 4X more resources than CLOS 3). If all unused resources are assigned to active CLOS levels equally, CLOS 1 will be allocated 16 ways while CLOS 3 will be allocated 12 ways, so CLOS 2 gets only 1.33X more than CLOS 3. By using operation 2002, the gap between the CLOS levels is maintained, preventing the low priority CLOS from taking valuable resources from a higher priority CLOS (although not necessarily the same ratio; in this example, the new ratio is 2X). Alternatively, if CLOS 3 is a low priority CLOS level that should never get more than 2 ways of the cache, embodiments of the invention may allocate all the unused resources to CLOS 1. Said more generally, if a lower priority CLOS has already been allocated a maximum number of resources, then any shared resources will be allocated to one or more higher priority CLOS levels.

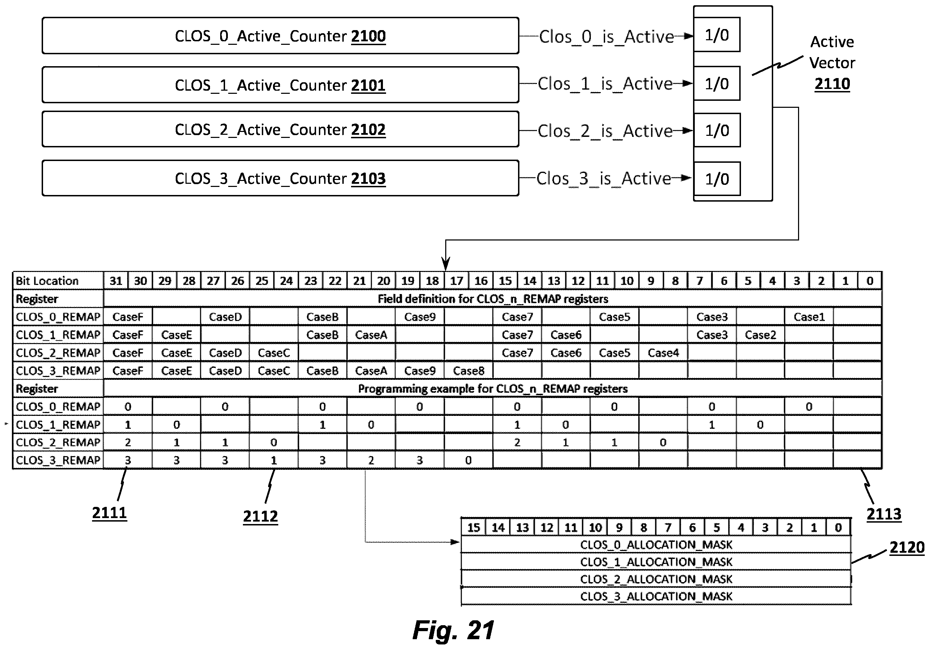

**Figure 21** illustrates an example hardware implementation. A plurality of counters 2100-2103 are associated with respective CLOS levels to track activity in the CLOS levels. Example code sequences describing the behavior of each counter is as follows:

```
            CLOS N Active Counter
            if (memory request with CLOS=N) {
               assign counter to active value (e.g. 1 mSec);
               assign Clos_N_is_Active=1;
            }
            else {
               decrement Counter;
               if (Counter==0) {
                   assign Clos_N_is_Active=0;
               }
            }
```

When the hardware (e.g., the cache controller in one embodiment) detects an activity of a specific CLOS (a memory request in this example), it forces the counter to restart from a (programmable) initial value and the corresponding CLOS level is marked Active. Each counter is decremented every cycle until another memory request which will force the counter back to the initial value. Alternatively, or additionally, the CLOS activity tracking may be event-based and not time-based (e.g., a counter is decremented when a request is received from another CLOS).

If a counter reaches '0, this means that a memory request for that CLOS level was not received for an extended period of time (e.g., based on the configurable counter reset value). The corresponding CLOS is then marked as inactive. In some embodiments, the activity of the thread or IP block is determined by requesting an indication from the Operating System or system software, which tracks activity, and/or by accessing programmable performance monitor counters of the SoC.

As indicated in **Figure 21****,** the values of the set of activity counters 2100-2103 indicate whether the corresponding CLOS is active (e.g., with a value of 1 indicating activity and 0 indicating inactive). An active vector 2110 is generated using these active/inactive indications, with a bit per CLOS.

A CLOS remapping is then performed, which can be implemented in several ways. In the example in **Figure 21****,** a lookup is performed in a 2-dimensional table (e.g., stored in a set of CLOS registers) to generate the current set of CLOS allocation masks 2120. Each row in the table corresponds to a CLOS, and the value in the active vector 2110 indicates the column to be selected for remapping. For example, column 2111 corresponds to an active vector of 1111, column 2113 corresponds to an active vector of 0000, and column 2112 corresponds to an active vector of 0011. The fields in a given column indicate the remapping to be performed (if any) for each CLOS. For example, column 2112 indicates that the resources of CLOS 0 (which is inactive) are to be remapped to CLOS 2 and that the resources of CLOS 1 (also inactive) are to be remapped to CLOS 3.

The table may be implemented in various ways while still complying with the underlying principles of the invention. For example, the table can be hardwired or programmed via a set of registers. "Case *X*" in the field definitions means that X is the hexadecimal value of the Active Vector. For example, "Case A" means hex A = binary 1010, indicating that CLOS levels 1 and 3 are active, and 0 and 2 are inactive and "Case C" in column 2112 means hex C = 1100, indicating that CLOS levels 2 and 3 are active. The upper portion of the table in **Figure 21** shows the register field names, and the lower portion of the table shows the value in a specific programming scenario.

The value in {row: CLOS N, column: Case X}, is the re-assigned CLOS for CLOS N when the active counter is X. Taking CaseA is an example, {row: CLOS 1, column: CaseA}=0, while {row: CLOS 3, column: CaseA}=2. This means that when only CLOS 1 and 3 are active, CLOS 1 is remapped to CLOS 0, and CLOS 3 is remapped to CLOS 2. Note that the fields {row: CLOS 0, column: CaseA} and {row: CLOS 2, column: CaseA} are left blank. These fields have no meaning, because in CaseA, CLOS 0 and 2 are not active, so there is no sense in remapping them.

In operation, the resource management circuitry that receives a request from a thread/IP block with CLOS level 1 when the active vector 2110 is 0xA, treats the request as a request of a thread/IP with CLOS level 0, so it assigns the waymask of CLOS 0 when performing cache allocations. While cache allocation is used as an example, the same principles for reassigning CLOS values may be implemented for other resource allocations and corresponding enforcement operations (e.g., memory bandwidth management, memory bandwidth enforcement, cache allocation enforcement, etc).

For assigning unused resources (not illustrated in **Figure 21**) the resource management circuitry checks what resources are not used by the active CLOSs, and it treats these resources as shared resources. In the illustrated example, CLOS levels 1 and 3 are active, and were re-assigned the resources of CLOS levels 0 and 2. Using the example of the waymask vector, the circuitry may perform a logical-NOR of the active vectors. The result is a vector of the unused resources, which is logically OR-ed with the vector that is already allocated to that CLOS, and hence a final waymasks 2120 are generated.

By way of example, and not limitation, assuming again an active vector of 0xA, CLOS 1 waymask is remapped to CLOS 0 waymask =0000111111111111 and CLOS 3 waymask is remapped to CLOS 2 waymask = 0000001111000000. Thus, the Unused waymask = 0000111111111111 NOR 0000001111000000 = 1111000000000000. Once allocated, the final CLOS 1 waymask = 0000111111111111 OR 1111000000000000= 1111111111111111 and the final CLOS 3waymask =0000001111000000 OR 1111000000000000= 1111001111000000.

Another implementation (not shown in the figure) is to have a full set of waymask vectors for each case. This implementation allows more flexibility but requires significantly more control registers.

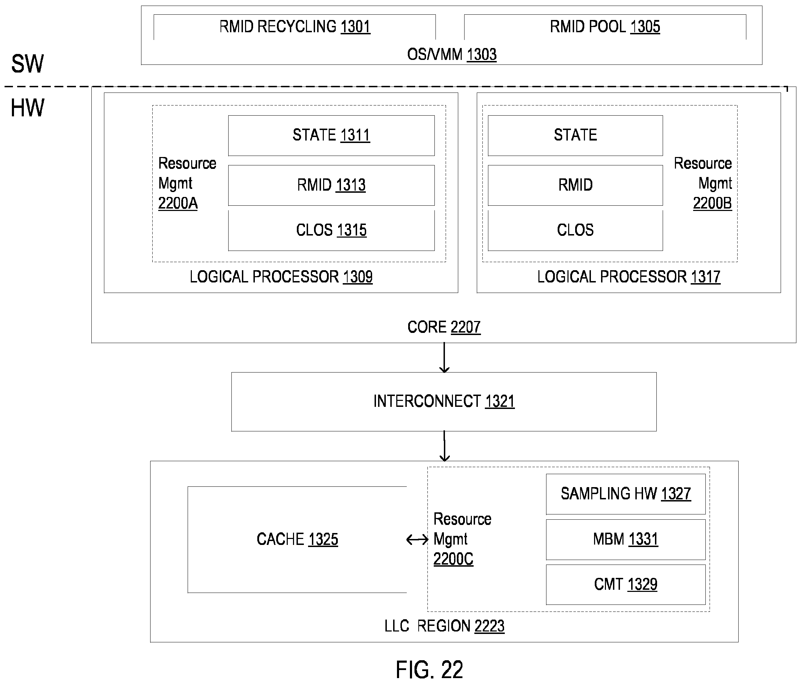

Referring to **FIG. 22****,** the embodiments of the invention described herein may be implemented by resource management circuitry 2200A-C integral to the logical processors 1309, 1317 of a core 2207 and/or within the shared LLC region 2223 (or in any other shared or "uncore" region of the processor). In some embodiments, portions of the resource management circuitry 2200A-B are integral to the core 2207 and other portions are integral to the LLC region 2223. Regardless of location, the resource management circuitry 2200A-C comprises the circuitry to implement the various active counters 2100-2103 and active vector 2110, the remap registers, and logic to generate and store the various allocation masks 2120 to perform CLOS remapping.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

### EXAMPLES

The following are example implementations of different embodiments of the invention.

Example 1. An apparatus comprising: a plurality of cores and/or functional circuit blocks to execute a plurality of threads; an interconnect coupled to the plurality of cores and/or functional circuit blocks; resource management circuitry to associate a class of service (CLOS) level of a plurality of CLOS levels with each thread of the plurality of threads, the resource management circuitry to detect one or more inactive CLOS levels corresponding to inactive threads and to responsively perform operations comprising: remapping active threads from corresponding active CLOS levels to the one or more inactive CLOS levels, the remapping to provide the active threads with a larger allocation of resources than provided at the corresponding active CLOS levels; and allocating any remaining resources to the active threads in accordance with the respective active CLOS levels of the active threads.

Example 2. The apparatus of example 1, wherein the resources comprise cache ways, each CLOS level associated with a specified group of the cache ways of a shared cache.

Example 3. The apparatus of example 1 or 2, wherein a first plurality of the cache ways associated with a first inactive CLOS level are remapped to a first subset of the active threads corresponding to a first active CLOS level and a second plurality of cache ways associated with a second inactive CLOS level are remapped to a second subset of the active threads corresponding to a second active CLOS level, wherein the first inactive CLOS level is higher than the first active CLOS level and the second inactive CLOS level is higher than the second active CLOS level.

Example 4. The apparatus of any of examples 1-3, wherein the first plurality of cache ways are partially overlapping with the second plurality of cache ways.

Example 5. The apparatus of any of examples 1-4, wherein the first plurality of cache ways and the second plurality of cache ways are non-overlapping.

Example 6. The apparatus of any of examples 1-5, wherein the resource management circuitry further comprises: a plurality of CLOS activity counters to track activity of respective threads of the plurality of threads; and a storage to store an activity vector generated based on values read from the plurality of CLOS activity counters, the resource management circuitry to detect the one or more inactive CLOS levels based on the activity vector.

Example 7. The apparatus of any of examples 1-6, wherein the activity vector comprise a bit value corresponding to each CLOS level of the plurality of CLOS levels, wherein a first bit value is to indicate that a corresponding CLOS level includes only inactive threads and a second bit value is to indicate that a corresponding CLOS level includes active threads.

Example 8. The apparatus of any of examples 1-8, wherein each core of the plurality of cores comprises two logical processors, each logical processor operable to execute at least one thread of the plurality of threads.

Example 9. A method, comprising: executing a plurality of threads on a plurality of cores and/or functional circuit blocks, the cores and/or functional circuit blocks coupled to an interconnect; associating, by resource management circuitry, a class of service (CLOS) level of a plurality of CLOS levels with each thread of the plurality of threads, the resource management circuitry to detect one or more inactive CLOS levels corresponding to inactive threads; remapping, by the resource management circuitry, active threads from corresponding active CLOS levels to the one or more inactive CLOS levels, the remapping to provide the active threads with a larger allocation of resources than provided at the corresponding active CLOS levels; and allocating any remaining resources to the active threads in accordance with the respective active CLOS levels of the active threads.

Example 10. The method of example 9, wherein the resources comprise cache ways, each CLOS level associated with a specified group of the cache ways of a shared cache.

Example 11. The method of examples 9 or 10, wherein a first plurality of the cache ways associated with a first inactive CLOS level are remapped to a first subset of the active threads corresponding to a first active CLOS level and a second plurality of cache ways associated with a second inactive CLOS level are remapped to a second subset of the active threads corresponding to a second active CLOS level, wherein the first inactive CLOS level is higher than the first active CLOS level and the second inactive CLOS level is higher than the second active CLOS level.

Example 12. The method of any of examples 9-11, wherein the first plurality of cache ways are partially overlapping with the second plurality of cache ways.

Example 13. The method of any of examples 9-12, wherein the first plurality of cache ways and the second plurality of cache ways are non-overlapping.

Example 14. The method of any of examples 9-13, further comprising: tracking activity of respective threads of the plurality of threads with a plurality of CLOS activity counters; and storing an activity vector generated based on values read from the plurality of CLOS activity counters, detecting the one or more inactive CLOS levels based on the activity vector.

Example 15. The method of any of examples 9-14, wherein the activity vector comprise a bit value corresponding to each CLOS level of the plurality of CLOS levels, wherein a first bit value is to indicate that a corresponding CLOS level includes only inactive threads and a second bit value is to indicate that a corresponding CLOS level includes active threads.

Example 16. A machine-readable medium having program code stored thereon which, when executed by a machine, causes the machine to perform operations, comprising: executing a plurality of threads on a plurality of cores and/or functional circuit blocks, the cores and/or functional circuit blocks coupled to an interconnect; associating, by resource management circuitry, a class of service (CLOS) level of a plurality of CLOS levels with each thread of the plurality of threads, the resource management circuitry to detect one or more inactive CLOS levels corresponding to inactive threads; remapping, by the resource management circuitry, active threads from corresponding active CLOS levels to the one or more inactive CLOS levels, the remapping to provide the active threads with a larger allocation of resources than provided at the corresponding active CLOS levels; and allocating any remaining resources to the active threads in accordance with the respective active CLOS levels of the active threads.

Example 17. The machine-readable medium of example 16, wherein the resources comprise cache ways, each CLOS level associated with a specified group of the cache ways of a shared cache.

Example 18. The machine-readable medium of examples 16 or 17, wherein a first plurality of the cache ways associated with a first inactive CLOS level are remapped to a first subset of the active threads corresponding to a first active CLOS level and a second plurality of cache ways associated with a second inactive CLOS level are remapped to a second subset of the active threads corresponding to a second active CLOS level, wherein the first inactive CLOS level is higher than the first active CLOS level and the second inactive CLOS level is higher than the second active CLOS level.

Example 19. The machine-readable medium of any of examples 16-18, further comprising program code to cause the machine to perform the operations of: tracking activity of respective threads of the plurality of threads with a plurality of CLOS activity counters; and storing an activity vector generated based on values read from the plurality of CLOS activity counters, detecting the one or more inactive CLOS levels based on the activity vector.

Example 20. The machine-readable medium of any of examples 16-19, wherein the activity vector comprise a bit value corresponding to each CLOS level of the plurality of CLOS levels, wherein a first bit value is to indicate that a corresponding CLOS level includes only inactive threads and a second bit value is to indicate that a corresponding CLOS level includes active threads.

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. An apparatus comprising:
a plurality of cores and/or functional circuit blocks to execute a plurality of threads;
an interconnect coupled to the plurality of cores and/or functional circuit blocks;
resource management circuitry to associate a class of service (CLOS) level of a plurality of CLOS levels with each thread of the plurality of threads, the resource management circuitry to detect one or more inactive CLOS levels corresponding to inactive threads and to responsively perform operations comprising:
remapping active threads from corresponding active CLOS levels to the one or more inactive CLOS levels, the remapping to provide the active threads with a larger allocation of resources than provided at the corresponding active CLOS levels; and
allocating any remaining resources to the active threads in accordance with the respective active CLOS levels of the active threads.

2. The apparatus of claim 1, wherein the resources comprise cache ways, each CLOS level associated with a specified group of the cache ways of a shared cache.

3. The apparatus of claim 2, wherein a first plurality of the cache ways associated with a first inactive CLOS level are remapped to a first subset of the active threads corresponding to a first active CLOS level and a second plurality of cache ways associated with a second inactive CLOS level are remapped to a second subset of the active threads corresponding to a second active CLOS level, wherein the first inactive CLOS level is higher than the first active CLOS level and the second inactive CLOS level is higher than the second active CLOS level.

4. The apparatus of claim 3, wherein the first plurality of cache ways are partially overlapping with the second plurality of cache ways.

5. The apparatus of claim 3, wherein the first plurality of cache ways and the second plurality of cache ways are non-overlapping.

6. The apparatus of any of claims 1 to 5, wherein the resource management circuitry further comprises:
a plurality of CLOS activity counters to track activity of respective threads of the plurality of threads; and
a storage to store an activity vector generated based on values read from the plurality of CLOS activity counters,
the resource management circuitry to detect the one or more inactive CLOS levels based on the activity vector.

7. The apparatus of claim 6, wherein the activity vector comprise a bit value corresponding to each CLOS level of the plurality of CLOS levels, wherein a first bit value is to indicate that a corresponding CLOS level includes only inactive threads and a second bit value is to indicate that a corresponding CLOS level includes active threads.

8. The apparatus of any of claims 1 to 7, wherein each core of the plurality of cores comprises two logical processors, each logical processor operable to execute at least one thread of the plurality of threads.

9. A method, comprising:
executing a plurality of threads on a plurality of cores and/or functional circuit blocks, the cores and/or functional circuit blocks coupled to an interconnect;
associating, by resource management circuitry, a class of service (CLOS) level of a plurality of CLOS levels with each thread of the plurality of threads, the resource management circuitry to detect one or more inactive CLOS levels corresponding to inactive threads;
remapping, by the resource management circuitry, active threads from corresponding active CLOS levels to the one or more inactive CLOS levels, the remapping to provide the active threads with a larger allocation of resources than provided at the corresponding active CLOS levels; and
allocating any remaining resources to the active threads in accordance with the respective active CLOS levels of the active threads.

10. The method of claim 9, wherein the resources comprise cache ways, each CLOS level associated with a specified group of the cache ways of a shared cache.

11. The method of claim 10, wherein a first plurality of the cache ways associated with a first inactive CLOS level are remapped to a first subset of the active threads corresponding to a first active CLOS level and a second plurality of cache ways associated with a second inactive CLOS level are remapped to a second subset of the active threads corresponding to a second active CLOS level, wherein the first inactive CLOS level is higher than the first active CLOS level and the second inactive CLOS level is higher than the second active CLOS level.

12. The method of claim 11, wherein the first plurality of cache ways are partially overlapping with the second plurality of cache ways.

13. The method of claim 12, wherein the first plurality of cache ways and the second plurality of cache ways are non-overlapping.

14. The method of any of claims 9 to 13, further comprising:
tracking activity of respective threads of the plurality of threads with a plurality of CLOS activity counters; and
storing an activity vector generated based on values read from the plurality of CLOS activity counters,
detecting the one or more inactive CLOS levels based on the activity vector.

15. The method of claim 14, wherein the activity vector comprise a bit value corresponding to each CLOS level of the plurality of CLOS levels, wherein a first bit value is to indicate that a corresponding CLOS level includes only inactive threads and a second bit value is to indicate that a corresponding CLOS level includes active threads.
